# EUROPEAN PATENT APPLICATION

(11) **EP 1 003 293 A1**
(43) Date of publication of application: **24.05.2000**
(21) Application number: 99402777.9
(22) Date of filing: 08.11.1999
(51) Int. Cl.: H04B 3/54

(54) **Process for synchronizing at least two time bases each belonging to a base station and base station thus synchronized**

(30) Priority: 20.11.1998 FR 9814664
(71) Applicant: Mitsubishi Electric France, 92000 Nanterre (FR)
(72) Inventor: Belaiche, Vincent Antoine Victor, 35500 Vitre (FR)
(74) Representative: Blot, Philippe Robert Emile

(57) **Abstract**

The invention relates to a process for synchronizing at least two time bases each individual to a base station (10, 12, 14, 16) of a wireless telecommunication installation. The time bases are formed of a succession of temporal blocks all having the same duration and the base stations are all supplied from the same electrical power supply network (18) with periodic signal. The period of the signal of the supply network (18) is a multiple of the duration of each temporal block. Each temporal block is synchronized with the periodic signal of the electrical power supply network (18).

## Description

The present invention relates to a process for synchronizing at least two time bases each individual to a base station of a wireless telecommunication installation, the time bases being formed of temporal blocks all having the same duration and the base stations all being supplied from the same electrical power supply network with periodic signal, in which the period of the power signal of the supply network is a multiple of the duration of each temporal block.

Current wireless telecommunication installations, especially when they are intended for residential or business networks, require it to be possible easily to add into these installations a base station capable of receiving and/or transmitting information without needing complex adjustments during implementation thereof. In particular, it should be possible to add a new station to the installation without the involvement of a qualified technician to tailor the synchronization of the new station with the other stations already installed, as a function of a radio mapping of the installation.

However, synchronization between the various base stations of a wireless telecommunication installation is advantageous so as to allow the simultaneous transmission of data trains formed by radio frames, whilst mobilizing the minimum transmission capabilities of the installation.

Generally, each base station has available means for formulating a time base individual thereto. This time base is formed of successive temporal blocks all having the same duration. Each temporal block allows the transmission of a data train. Synchronization of the sending of the data trains emanating from several base stations amounts to synchronizing the time bases of the various base stations.

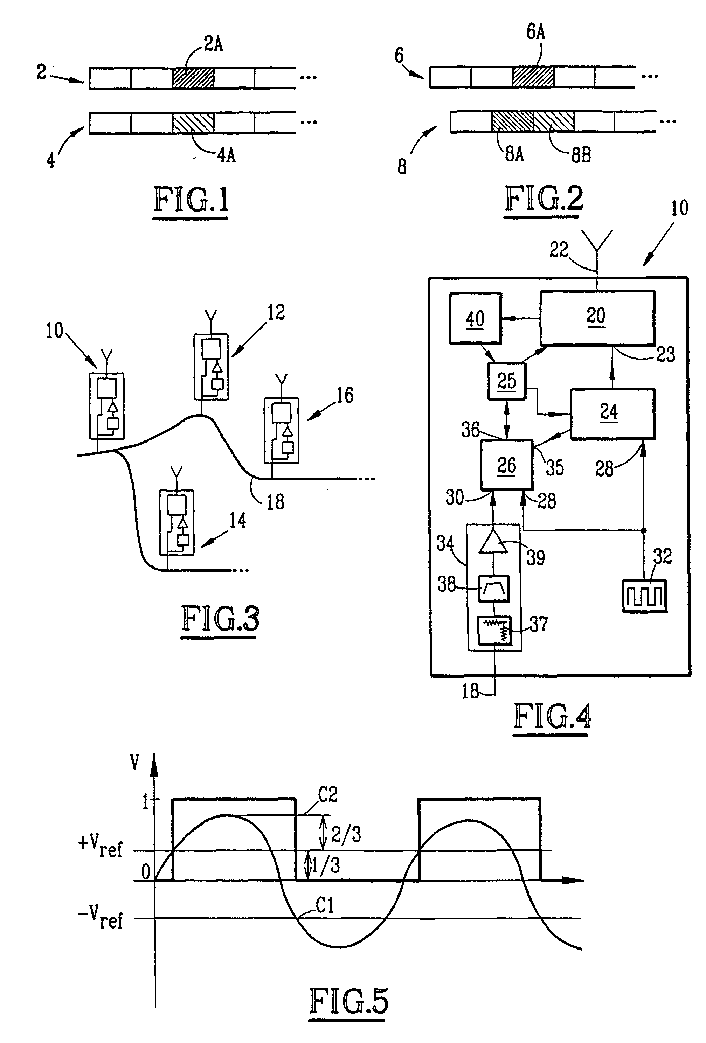

Each radio frame is conventionally divided into a finite set of time slots, as represented in Figures 1 and 2. Each radio frame comprises for example 16 successive time slots of the same duration. Each time slot allows the transmission of an elementary message, commonly referred to as a "burst".

Each base station has an area of coverage referred to as a cell. In the case of two cells which are close enough such that the path fading does not afford sufficient separation of the two cells, it is appropriate, so as to allow the transmission of two elementary messages in the two relevant cells respectively, and moreover simultaneously or in partially overlapping time slots, for the two elementary messages to use different distinctive formats so that they can be distinguished. The different distinctive formats of the elementary messages can be obtained by using distinct frequencies (Frequency Division), or alternatively by implementing suitable coding methods (Code Division).

Represented partially in Figure 1 are two radio frames corresponding to the two relevant cells, assuming that the base stations of these two cells are radio-frame synchronized.

The synchronizing of the radio frames allows the content of any time slot 2A of a first radio frame 2 to be transmitted strictly at the same time as the content of a single time slot 4A of a second radio frame 4 sent simultaneously.

As represented in Figure 2, in the absence of synchronization, on the contrary, the content of each time slot 6A of a first radio frame 6 is transmitted partially overlapping two successive time slots 8A, 8B of a second radio frame.

Thus, the contents of the two time slots 8A and 8B must each have a distinctive format allowing them to be distinguished from the content or contents of the time slot 6A.

More generally, in the absence of synchronization in respect of an installation comprising n base stations close together, the cells of which may potentially interfere with one another, the content of any time slot in a cell must have a distinctive format allowing it to be distinguished from the contents of the 2n-2 partially concomittant time slots of other radio frames corresponding to the n-1 other base stations.

On the other hand, if the radio frames are synchronized, the content of any time slot must have a distinctive format allowing it to be distinguished from the contents of only n-1 time slots of other radio frames emanating from the n-1 other base stations.

A reduction in the number of exclusion relations per distinctive format makes it possible to increase the number of distinctive formats available at a given moment between several potentially interfering cells, and hence consequently the amount of information flowing simultaneously around the installation.

Several solutions have been proposed for the automatic synchronizing of the radio frames transmitted by several base stations.

According to a first solution, there is provision for an additional base station adapted for sending synchronization messages intended for the other base stations. Each base station synchronizes the sending of the radio frames on the synchronization message received.

A second solution provides for a network to which each of the base stations is connected. This network addresses synchronization messages to these base stations.

These solutions operate satisfactorily. However, they require co-operation between the various constructors or operators who may set up new base stations within the telecommunication installation, this being disadvantageous as regards a system intended for residential or business use.

The purpose of the invention is to provide a synchronization process and device not requiring the involvement of a highly qualified technician for the synchronization of a new base station set up within the installation, and the design of which dispenses with co-operation between the various parties involved in the installation.

To this end, the subject of the invention is a process for synchronizing at least two time bases each individual to a base station of a wireless telecommunication installation, the time bases being formed of a succession of temporal blocks all having the same duration and the base stations all being supplied from the same electrical power supply network with periodic signal, in which the period of the supply signal of the supply network is a multiple of the duration of each temporal block, characterized in that each temporal block is synchronized with the periodic signal of the electrical power supply network.

According to particular modes of implementation, the process comprises one or more of the following characteristics:
- the base stations simultaneously transmit data trains upon synchronized temporal blocks, each data train being transmitted upon a temporal block, thereby ensuring the synchronization of the transmission of each data train with the periodic signal of the electrical power supply network;
- each base station generates a main clocking signal synchronized with the signal of the electrical power supply network, and the transmission of data trains from the base station is triggered by a predetermined change of state of the main clocking signal;
- the main clocking signal is a square signal, and the transmission of data trains is triggered by the detecting of an edge of the said square signal;
- the change of state of the square signal is brought about by the crossing, by the voltage of the periodic signal of the supply network, of at least one reference voltage, the or each reference voltage being a predetermined fraction of the maximum voltage of the periodic signal of the supply network;
- each base station tracks the evolution of the periodic signal of the supply network and, upon detecting an instability in the signal, the synchronization of the temporal blocks with the periodic signal of the supply network is temporarily interrupted;
- during the temporary interruption of synchronization, the base station tracks the evolution of the periodic signal of the supply network and the synchronization of temporal blocks with the periodic signal of the supply network is resumed after a predetermined duration in the course of which no instability in the signal has been detected; and
- in the course of the interruption of synchronization, and before resuming synchronization, each base station whose synchronization will be resumed transmits, for the attention of the mobile stations communicating with it, a message announcing resynchronization.

The subject of the invention is moreover a base station of a wireless telecommunication installation, of the type comprising means for establishing a time base individual to this station, the time base being formed of a succession of temporal blocks all having the same duration, means of connection to an electrical power supply network with periodic signal, the period of the supply signal of the supply network being a multiple of the duration of each temporal block, and means for synchronizing the base station with other base stations connected to the same supply network for synchronization of the temporal blocks, characterized in that the synchronizing means comprise means for synchronizing the temporal blocks with the periodic signal of the electrical power supply network.

According to particular embodiments, the base station comprises one or more of the following characteristics:
- it comprises means for transmitting data trains upon temporal blocks, each data train being transmitted upon a temporal block thus ensuring the synchronization of the transmission of each data train with the periodic signal of the electrical power supply network;
- it comprises means for generating a main clocking signal synchronized with the signal of the electrical power supply network, and means for triggering the transmission of the data trains from the base station upon a predetermined change of state of the main clocking signal;
- the main clocking signal is a square signal, and the transmission of data trains is triggered by the detecting of an edge of the said square signal;
- it comprises means for tracking the evolution of the periodic signal of the supply network, means for temporarily interrupting the synchronization of the temporal blocks with the periodic signal of the supply network, upon the detection of an instability in the signal;
- the means for tracking the evolution of the signal are adapted so as, during the temporary interruption of synchronization, to track the evolution of the periodic signal of the supply network and instruct the resumption of the synchronization of the temporal blocks with the periodic signal of the supply network after a predetermined duration in the course of which no instability in the signal has been detected; and
- it comprises means for transmitting, for the attention of mobile stations communicating with the base station, in the course of the interruption of synchronization and before the resumption of synchronization, a message announcing resynchronization.

The invention will be better understood on reading the description which follows, given merely by way of example and whilst referring to the drawings in which:
- Figures 1 and 2 already cited are diagrammatic views of pairs of radio frames transmitted simultaneously, synchronized and non-synchronized respectively;
- Figure 3 is a diagrammatic view of a telecommunication installation adapted for implementation of the synchronization process according to the invention;
- Figure 4 is a diagrammatic view of a base station of the installation of Figure 3;
- Figure 5 is a graph showing the evolution over time of the supply voltage and of a clocking signal resulting therefrom for synchronizing the transmission of frames; and
- Figure 6 is a flow chart explaining the operation of the means for synchronizing a base station.

Represented diagrammatically in Figure 3 is a part of a wireless telecommunication installation. Only four base stations 10, 12, 14, 16 are represented. They are each adapted for sending and receiving radio frames each comprising sixteen time slots. The network satisfies for example the specifications defined by the ETSI in respect of UMTS (Universal Mobile Telecommunication System) in TDD mode. The duration of each radio frame, corresponding to the duration of a temporal block of the time base defined for each base station, is 10 ms.

The base stations 10 to 16 are supplied with electrical power from a common supply network 18 to which they are connected. The network 18 consists for example of the local power supply network. The latter delivers an AC voltage, of for example 220V rms. The supply signal is periodic and has a constant frequency of 50 Hz, i.e. a period of 20 ms.

In the example considered, base stations 10 to 16 are all identical. Station 10 is represented in Figure 4. The latter comprises transmission means 20 linked to an antenna 22 for sending and receiving elementary messages. The transmission means 20 are adapted, as known per se, so as to send and/or receive elementary messages in time slots of radio frames as a function of a synchronization signal received on an input 23. The latter is linked to the output of means 24 producing a synchronization signal. The means 24 are adapted to address, to the transmission means 20, a synchronization signal defining the position in time of a radio frame. The period separating the despatches, by the means 24, of a synchronization signal to the transmission means 20 is equal to the duration of a temporal block.

A temporal block is then defined as the interval of time separating two successive synchronization signals, this interval allowing the sending and/or receiving of elementary messages in a radio frame.

The means 24 producing the synchronization signal are controlled by a drive unit 25. The latter also controls the transmission means 20.

Means 26 for analysing the voltage delivered by the supply network 18 are linked to the drive unit 25 so that the latter controls the means 20 and 24 as a function of the evolution of the supply voltage.

Analysis means 26 are adapted in particular to monitor the evolution of the frequency of the supply signal. They are intended more particularly to detect the frequency instability of this signal and to compare this instability with a predetermined instability threshold. They produce an indicator I representative of the stability of the supply signal.

The means 24 for producing the synchronization signal and the means 26 of analysis both comprise an analogous input 28. To this input 28 is linked a local clock 32 delivering a clock signal of substantially constant high frequency equal for example to 13 MHz. This clock signal is generated by the clock 32 within the base station 10 and is independent of the corresponding clock signals of the other base stations.

A second input 30 of the means 26 is linked to means 34 for generating a main clocking signal, synchronized with the sinusoidal signal of the supply network 18. The main clocking signal is a square signal.

A third input 35 of the means 26 is linked to the means 24 so as to receive an auxiliary clocking signal similar to the main clocking signal received on the input 30 and aligned with the latter signal so long as the base station is in the mode synchronized with the supply network.

A fourth input 36 of the means 26 is linked to the drive unit 25. It is intended to receive an indication originating from the unit 25, indicating that the auxiliary clocking signal has just been corrected by a certain quantity D, this quantity D being determined either so as to keep the auxiliary clocking signal aligned with the main clocking signal, or so as to resynchronize it with the main clocking signal.

The means 34 comprise, onwards of the common supply network 18, means 37 for lowering the voltage and a band-pass filter 38 to the output of which is connected a hysteresis comparator 39.

The means 37 of lowering the voltage comprise, for example, a passive voltage divider, a transformer, or a low-gain active multiplier circuit. They perform a lowering of the voltage for example by a reduction coefficient equal to 31.

The passband of the band-pass filter 38 is centred on the mean frequency of the supply signal delivered by the network 18, that is to say 50 Hz.

The hysteresis comparator 39 comprises two toggling thresholds +V_{ref} and -V_{ref} whose values are equal and opposite with respect to the zero voltage.

The means 26 are adapted to calculate a relative phase shift D between the main clocking signal received on the input 30 and the auxiliary clocking signal received on the input 35 and originating from the means 24. This phase shift D is expressed as a number of clock periods 32 between the rising edges of the auxiliary clocking signal and the rising edges of the main clocking signal.

The means 26 are furthermore adapted to keep up to date an absolute phase O of the auxiliary clocking signal. Each time the means 25 indicate to the means 26 that the auxiliary clocking signal has just been corrected by D, the absolute phase O is then incremented by the phase shift D.

Each time that a relative phase shift D is calculated, the means 26 store in a journal list the absolute phase shift D'=D-O between the main and auxiliary clocking signals. The means 26 also produce an indicator I of frequency stability of the main clocking signal, doing so by observing the variations over time in the absolute phase shift D' with the aid of the journal list which is kept thereof. The main clocking signal is deemed stable when the absolute phase shift D' has not varied by at most a certain threshold during at least a certain time counted as a number of clock periods 32. Let us note that the variations in the absolute phase shift D' are estimated modulo 20 ms in our example, for example with the clock 32 at 13 MHz, 20 ms gives 260,000 clock periods, and hence a movement in the absolute phase shift D from 259,999 to 0 is a small variation (259,999 is in fact equal to -1 modulo 260,000).

Depending on the evaluation of the duration of each slot, the means 26 determine whether the periodic signal of the supply network has a stable frequency or otherwise over a predetermined time span. According to the pair (I,D) produced by the means 25, where I is an indicator representing the stability of the main clocking signal, and D is the correcting relative phase shift to be applied to the auxiliary clocking signal in order to realign it with the main signal, the drive unit 25 puts the operation of the station into a mode synchronized with the supply signal, in which the auxiliary clocking signal is realigned with the main clocking signal, or into a mode which is not synchronized with the supply signal, in which the auxiliary clocking signal established by the means 24 evolves solely on the basis of the internal clock 32.

When the drive means 25 instruct the realignment or resynchronization of the auxiliary clocking signal with the main clocking signal by the shift D, they then inform the means 26 thereof.

Thus, according to the mode of control of the drive unit 25, the clocking of the radio frames processed by the transmission means 20 is synchronized either with the periodic signal of the electrical power supply network 18, or with an auxiliary clocking signal formulated solely from the internal clock 32 of the base station.

The synchronization signal is established by the means 24 on the basis of the auxiliary clocking signal. This synchronization signal is addressed to the transmission means 20, on the one hand upon each reception of a rising edge of the auxiliary clocking signal, and on the other hand after the expiry of a lag of 10 ms after the reception of a rising edge. The expiry of the lag of 10 ms is determined on the basis of the internal clock 32.

Thus, in the mode synchronized with the supply signal, a synchronization signal is despatched to the transmission means 20 with a frequency of 100 Hz while being synchronized with the supply signal having a frequency of 50 Hz.

The auxiliary clocking signal is a square signal formulated within the means 24. It has a fixed frequency equal to the theoretical frequency of the electrical power supply network. It is obtained by implementing an adapted counter, which sums the pulses received at high frequency from the clock 32. The means 24 are adapted to realign this signal by any phase shift D delivered by the drive means 25.

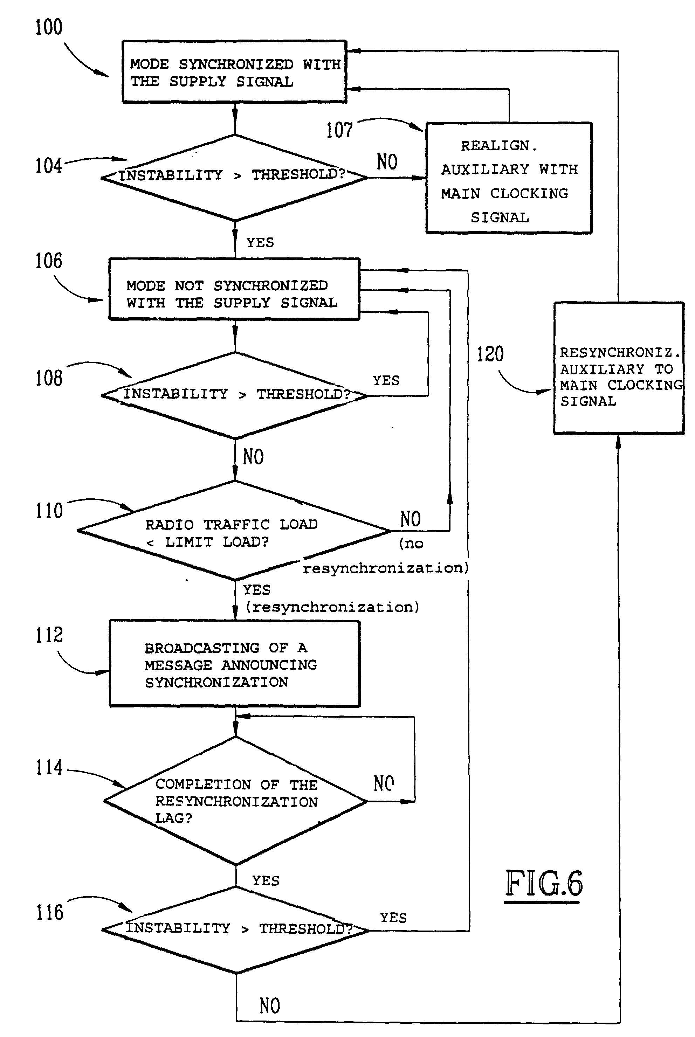

The conditions of operation of the base station in one or other of the synchronization modes will be described in detail with reference to Figure 6.

Furthermore, each base station comprises means 40 for evaluating the radio traffic load. The means 40 are adapted to determine the load of the domain covered by the relevant station. They are linked to the drive unit 25 so that the latter may control the transmission means 20 so as to trigger the sending of a resynchronization message for the attention of the mobile stations currently communicating with the relevant base station, when the latter carries out a resynchronization with the signal of the supply network 18.

Illustrated in Figure 5 is the mode of operation of the means 34 for generating the main clocking signal.

The sinusoidal curve C1 represents the evolution of the voltage of the supply network 18 over time after lowering the voltage by the means 37 and filtering by the band-pass filter 38. The sinusoidal signal obtained has a frequency of 50 Hz, so that the period of the signal is 20 ms, that is to say twice the duration of the radio frames.

The comparator 39 is adapted to compare the voltage with two threshold values denoted +V_{ref} and -V_{ref}. These threshold voltages are advantageously equal to a fraction of the maximum value of the supply voltage. In the example considered, the reference voltage is taken equal to a third of the voltage at the output of the filter 38.

The curve C2 represents the output value from the comparator 39 as a function of the evolution of the supply voltage.

When the supply voltage becomes greater than the reference voltage +V_{ref}, the output value from the comparator goes to 1. This value goes to zero when the supply voltage becomes less than the reference voltage -V_{ref}.

Thus, a square signal forming the main clocking signal is obtained at the output of the comparator 39. The frequency of the latter corresponds exactly to the frequency of the supply signal.

When the synchronization signal delivered to the transmission means 20 depends on the main clocking signal, the radio frames are synchronized with the periodic signal of the electrical power supply network 18. Since the period of oscillation of the supply signal of the network is a multiple of the duration of each temporal block, the synchronization means 24 send, during a period of the supply signal, an integer number, here equal to 2, of synchronization signals to the transmission means 20. Upon reception of the synchronization signal, the means 20 begin the processing of a radio frame.

Each base station being connected to the same supply network, they are all synchronized in a similar manner with respect to the same reference signal. Thus, the radio frames are all transmitted simultaneously and with satisfactory synchronization of the time slots of which they consist.

Represented in Figure 6 is the flow chart of the operation of the drive unit 25, and in particular of the logic for controlling the means 24 for producing a synchronization signal.

In the state 100, it is assumed that the synchronization signal is fixed by the frequency of the supply signal. Thus, the processing of the radio frames is synchronized with the supply signal.

In step 104, the means 25 have received a pair (I, D) from the means 26. If I indicates that a frequency instability, of magnitude greater than a predefined threshold, has been detected, the base station is switched, in step 106, over to a mode of operation which is not synchronized with the supply signal in which the auxiliary clocking signal, produced by the means 24, is no longer realigned with the main clocking signal, but evolves solely on the basis of the clock signal received on the input 28. If I does not indicate any frequency instability, the phase shift D is applied to the auxiliary clocking signal, in step 107, so as to keep them aligned with the main clocking signal. The mode synchronized with the supply signal is thus maintained.

In step 107, the drive unit 25 instructs the means 24 to realign the auxiliary clocking signal by the phase shift D. The unit 25 also informs the analysis means 26 of this realignment.

Upon switching over to the mode which is not synchronized with the supply signal, on passing to the state 106, the synchronization signal produced by the means 24 corresponds to the auxiliary clocking signal not slaved to the supply signal. The latter is initially aligned with the last rising edge of the main clocking signal, ahead of the edge on which the instability was detected. Its frequency is subsequently imposed by counting the pulses of the clock 32.

The mutual synchronization of the various base stations of the installation is then no longer ensured in the long term, since the synchronization signal of each station is determined by its internal clock 32 and since the various internal clocks 32 may drift with respect to one another. The transmission capability of the installation is then reduced.

In step 108, the drive unit 25 may have received a pair (I, D) from the analysis means 26. This is because the analysis means 26 continuously analyse the supply voltage with a view to detecting the end of a period of frequency instability. Thus, if for a duration greater than a reference duration no instability greater than the predetermined threshold is detected, the analysis means 26 despatch a pair (I, D) to the drive unit 25 where I indicates that the main clocking signal is stable. If such a pair has been received, the drive unit 25 goes to step 110, otherwise the base station continues to operate in the mode not synchronized with the supply signal.

In step 110, the drive unit 25 checks whether the radio traffic load indicated by the means of evaluation 40 is appropriate for resynchronization, that is to say for example that it is less than a limit load. If such is not the case, the mode not synchronized with the supply signal is maintained.

As soon as the radio traffic load so permits, the drive unit 25 instructs the transmission means 20 so as to bring about, in step 112, the sending of a message announcing resynchronization for the attention of the mobile stations communicating with the base station. This message indicates to the mobile stations the instant at which the mode of synchronization with the supply signal will be resumed. The message announcing resynchronization is received by each mobile station concerned on a common broadcasting channel or on a channel dedicated to this mobile station.

In step 114, the analysis means 26 process the completion of the resynchronization lag. After the completion of the latter, if the main clocking signal is tested as stable in step 116, then the base station is switched into the mode synchronized with the supply signal, in step 120. This comprises commanding the means 24 to realign the auxiliary clocking signal of the latter by the correcting phase shift D received from the means 26, and to report this correction to the means 26. This switching is performed over the duration of a single radio frame.

All the base stations normally being synchronized to the same supply signal, they process, upon simultaneous temporal blocks, radio frames which are mutually synchronized, so that the risks of interference between the various time slots are minimal.

In the foregoing example, the period of the supply network is twice the duration of each radio frame. However, the synchronization process can be implemented irrespective of the period of the supply network insofar as this period is equal to an integer number of times the duration of each radio frame.

Moreover, synchronization to the periodic supply signal can be effected for each time slot rather than for each radio frame. The unit temporal block of the time base is then the duration of a time slot. In this case, the period of the supply network is equal to 32 times the duration of each time slot, so that actual resynchronization can be effected only every 32 time slots, the intermediate synchronization signals being generated from the internal clock 32.

More generally, any data train sent upon a temporal block of the relevant time base can be synchronized with the supply signal according to the process of the invention, insofar as the period of the supply network is a multiple of the duration of the temporal blocks forming the time base.

## Claims

1. Process for synchronizing at least two time bases each individual to a base station (10, 12, 14, 16) of a wireless telecommunication installation, the time bases being formed of a succession of temporal blocks all having the same duration and the base stations all being supplied from the same electrical power supply network (18) with periodic signal, in which the period of the supply signal of the supply network (18) is a multiple of the duration of each temporal block, characterized in that each temporal block is synchronized with the periodic signal of the electrical power supply network (18).

2. Process according to Claim 1, characterized in that the base stations (10, 12, 14, 16) simultaneously transmit data trains upon synchronized temporal blocks, each data train being transmitted upon a temporal block, thereby ensuring the synchronization of the transmission of each data train with the periodic signal of the electrical power supply network (18).

3. Process according to Claim 2, characterized in that each base station (10, 12, 14, 16) generates a main clocking signal synchronized with the signal of the electrical power supply network (18), and the transmission of data trains from the base station is triggered by a predetermined change of state of the main clocking signal.

4. Process according to Claim 3, characterized in that the main clocking signal is a square signal, and the transmission of data trains is triggered by the detecting of an edge of the said square signal.

5. Process according to Claim 4, characterized in that the change of state of the square signal is brought about by the crossing, by the voltage of the periodic signal of the supply network (18), of at least one reference voltage, the or each reference voltage being a predetermined fraction of the maximum voltage of the periodic signal of the supply network (18).

6. Process according to any one of the preceding claims, characterized in that each base station (10, 12, 14, 16) tracks the evolution of the periodic signal of the supply network (18) and, upon detecting an instability in the signal, the synchronization of the temporal blocks with the periodic signal of the supply network (18) is temporarily interrupted.

7. Process according to Claim 6, characterized in that, during the temporary interruption of synchronization, the base station (10, 12, 14, 16) tracks the evolution of the periodic signal of the supply network (18) and the synchronization of temporal blocks with the periodic signal of the supply network (18) is resumed after a predetermined duration in the course of which no instability in the signal has been detected.

8. Process according to Claim 6 or 7, characterized in that in the course of the interruption of synchronization, and before resuming synchronization, each base station (10, 12, 14, 16) whose synchronization will be resumed transmits, for the attention of the mobile stations communicating with it, a message announcing resynchronization.

9. Base station (10, 12, 14, 16) of a wireless telecommunication installation, of the type comprising means for establishing a time base individual to this station, the time base being formed of a succession of temporal blocks all having the same duration, means of connection to an electrical power supply network (18) with periodic signal, the period of the supply signal of the supply network (18) being a multiple of the duration of each temporal block, and means for synchronizing the base station with other base stations connected to the same supply network for synchronization of the temporal blocks, characterized in that the synchronizing means comprise means for synchronizing the temporal blocks with the periodic signal of the electrical power supply network (18).

10. Base station according to Claim 9, characterized in that it comprises means for transmitting data trains upon temporal blocks, each data train being transmitted upon a temporal block thus ensuring the synchronization of the transmission of each data train with the periodic signal of the electrical power supply network (18).

11. Base station according to Claim 10, characterized in that it comprises means (34) for generating a main clocking signal synchronized with the signal of the electrical power supply network (18), and means (24, 25) for triggering the transmission of the data trains from the base station upon a predetermined change of state of the main clocking signal.

12. Base station according to Claim 11, characterized in that the main clocking signal is a square signal, and the transmission of data trains is triggered by the detecting of an edge of the said square signal.

13. Base station according to any one of Claims 9 to 12, characterized in that it comprises means (26) for tracking the evolution of the periodic signal of the supply network (18), means (26, 24) for temporarily interrupting the synchronization of the temporal blocks with the periodic signal of the supply network (18), upon the detection of an instability in the signal.

14. Base station according to Claim 13, characterized in that the means (26) for tracking the evolution of the signal are adapted so as, during the temporary interruption of synchronization, to track the evolution of the periodic signal of the supply network (18) and instruct the resumption of the synchronization of the temporal blocks with the periodic signal of the supply network (18) after a predetermined duration in the course of which no instability in the signal has been detected.

15. Base station according to Claim 13 or 14, characterized in that it comprises means (20, 25, 40) for transmitting, for the attention of mobile stations communicating with the base station, in the course of the interruption of synchronization and before the resumption of synchronization, a message announcing resynchronization.
